# EUROPEAN PATENT APPLICATION

(11) **EP 4 651 346 A1**
(43) Date of publication of application: **19.11.2025**
(21) Application number: 25174353.0
(22) Date of filing: 06.05.2025
(51) Int. Cl.: H02K 3/28, H02K 21/24

(54) **STATOR STRUCTURE OF AXIAL FLUX MOTOR**

(30) Priority: 14.05.2024 US 202463647085 P; 20.11.2024 CN 202411665180; 28.04.2025 US 202519192306
(71) Applicant: Delta Electronics, Inc., Taoyuan City 333 (TW)
(72) Inventor: CHEN, Yi-No, 333 Taoyuan (TW); HSU, Tzu-Ting, 333 Taoyuan (TW)
(74) Representative: Nederlandsch Octrooibureau

(57) **Abstract**

A stator structure of an axial flux motor includes a plurality of conductors. The stator has a plurality of magnetic poles and a plurality of slots, and each slot includes a plurality of level-positions in an axial direction. The conductors are arranged through the level-positions of the slots to form windings. After each conductor passes through a lowest level-position, the conductor steps to the next magnetic pole position, it climbs and passes through a next higher level-position until it climbs and passes through the highest level-position. The conductors include a first conductor and a second conductor, and the relative positions of the portions of the first conductor and the second conductor that protrude outside the stator at all the slots remain unchanged.

## Description

### BACKGROUND

### Field of Disclosure

The present disclosure relates to a motor structure, and more particularly to a winding structure of an axial flux motor stator.

### Description of Related Art

Motors are components configured to convert electrical energy into mechanical energy and have been widely used in daily life. The current axial flux motor uses distributed winding, and the conductors are routed along the circumferential slots in the stator slots according to the corresponding magnetic pole positions. In order to ensure that the conductor arrangements can effectively fill the space in the slot and improve the slot fill factor, the two conductors in adjacent slots must be swapped up and down in the axial direction for the protrusions before routing to the next magnetic pole. This makes it difficult for each conductor to be further assembled into a complete winding after being bent, and the overall winding needs to be formed using complex winding methods and equipment.

### SUMMARY

The present disclosure provides a stator structure of an axial flux motor to deal with the needs of the prior art problems.

In one or more embodiments, a stator structure of an axial flux motor includes a plurality of magnetic poles having a plurality of magnetic pole positions and a plurality of level-positions. The conductors are routed from one magnetic pole position to another magnetic pole position of the magnetic pole positions and wound through the level-positions respectively to form a plurality of windings. Each conductor climbs to a higher level-position while being routed from a magnetic pole to a next magnetic pole of the magnetic poles after passing through one of the lowest level-positions of the level-positions until climbing to the highest level-positions of the level-positions. The conductors comprise a first conductor and a second conductor, and all portions of the first conductor and the second conductor that have relative positions remain unchanged in an axial direction.

In one or more embodiments, each conductor includes a plurality of inner diameter protrusions located in an internal space surrounding an axis of the soft magnetic material body, and two halves of each inner diameter protrusion are at two positions that are aligned with two immediately-adjacent level-positions in the axial direction respectively.

In one or more embodiments, each conductor includes a plurality of outer diameter protrusions exposed outside an outer sidewall of the soft magnetic material body, and two halves of each outer diameter protrusion are at two positions that are aligned with two immediately-adjacent level-positions in the axial direction respectively.

In one or more embodiments, each conductor includes a plurality of inner diameter protrusions located in an internal space surrounding an axis of the soft magnetic material body, and each inner diameter protrusion of the second conductor is at least partially located above a corresponding inner diameter protrusion of the first conductor in the axial direction.

In one or more embodiments, each conductor includes a plurality of outer diameter protrusions exposed outside an outer sidewall of the soft magnetic material body, and each outer diameter protrusion of the second conductor is at least partially located above a corresponding outer diameter protrusion of the first conductor in the axial direction.

In one or more embodiments, each conductor is formed by bending a continuous conductor, or includes a plurality of assembled or welded conductors.

In one or more embodiments, each conductor is wound around the soft magnetic material body in a spiral or star-shaped arrangement.

In one or more embodiments, each conductor includes a plurality of inner diameter protrusions located in an internal space surrounding an axis of the soft magnetic material body, and a half of each inner diameter protrusion of the second conductor is located above an immediately-adjacent half of a corresponding inner diameter protrusion of the first conductor in the axial direction.

In one or more embodiments, each conductor includes a plurality of outer diameter protrusions exposed outside an outer sidewall of the soft magnetic material body, and a half of each outer diameter protrusion of the second conductor is located above an immediately-adjacent half of a corresponding outer diameter protrusion of the first conductor in the axial direction.

In one or more embodiments, the stator structure further includes a soft magnetic material body having the plurality of magnetic poles and a plurality of slots, each slot including the level-positions arranged in the axial direction.

In one or more embodiments, each conductor includes a plurality of inner diameter protrusions, a plurality of receiving portions and a plurality of outer diameter protrusions, the receiving portions are disposed in the slots, the inner diameter protrusions are disposed in an internal space surrounding an axis of the soft magnetic material body, and the outer diameter protrusions are exposed outside an outer sidewall of the soft magnetic material body.

In one or more embodiments, the conductors are inserted in the slots and partially protruded from the soft magnetic material body toward both an internal space surrounding an axis and an outer sidewall of the soft magnetic material body.

In one or more embodiments, each conductor includes a plurality of inner diameter protrusions located in an internal space surrounding an axis of the soft magnetic material body, and two halves of each inner diameter protrusion are at two positions that are aligned with two immediately-adjacent level-positions in the axial direction respectively.

In one or more embodiments, each conductor includes a plurality of outer diameter protrusions exposed outside an outer sidewall of the soft magnetic material body, and two halves of each outer diameter protrusion are at two positions that are aligned with two immediately-adjacent level-positions in the axial direction respectively.

In one or more embodiments, each conductor includes a plurality of inner diameter protrusions, a plurality of receiving portions and a plurality of outer diameter protrusions, the receiving portions are disposed in the slots, the inner diameter protrusions are disposed in an internal space surrounding an axis of the soft magnetic material body, and the outer diameter protrusions are exposed outside an outer sidewall of the soft magnetic material body.

In sum, the stator structure of the axial flux motor disclosed herein has its conductor formed into a climbing structure arranged in a spiral or star-shaped arrangement in the circumferential direction. Each time when each conductor is routed from one magnetic pole position to the next magnetic pole position, the conductor protruding from the slot climbs to a higher level-position, and continue to climb toward the highest level-positions until reaching the highest level-position in the slots. This conductor structure allows the relative positions of the upper and lower conductors to remain positions relation unchanged while winding different strands of conductors, thereby avoiding up and down staggering. This structure allows each conductor to be assembled into a complete winding in a simple manner after being formed or bent, and deals with various deficiencies in conventional solutions. After each conductor climbs to the highest level-position of the slots, the conductors are connected in series to the next conductor through the connecting section, and the same structure continues to climb from the lowest level-position to the highest level-position.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 illustrates a perspective view of a stator structure of an axial flux motor according to an embodiment of the present disclosure;
Fig. 2 illustrates a perspective view of a soft magnetic material body in Fig. 1;
Fig. 3 illustrates a perspective view of a conductor according to an embodiment of the present disclosure;
Fig. 4 illustrates a side view of the conductor in Fig. 3;
Fig. 5 illustrates a top view of the conductor in Fig. 3;
Fig. 6 illustrates a perspective view of two conductors according to an embodiment of the present disclosure;
Fig. 7 illustrates a perspective view of a winding would through the soft magnetic material body in the same phase according to an embodiment of the present disclosure; and
Fig. 8 illustrates a perspective view of a coreless stator structure of an axial flux motor.

### DETAILED DESCRIPTION

Reference will now be made in detail to the present embodiments of the disclosure, examples of which are illustrated in the accompanying drawings. Wherever possible, the same reference numbers are used in the drawings and the description to refer to the same or like parts.

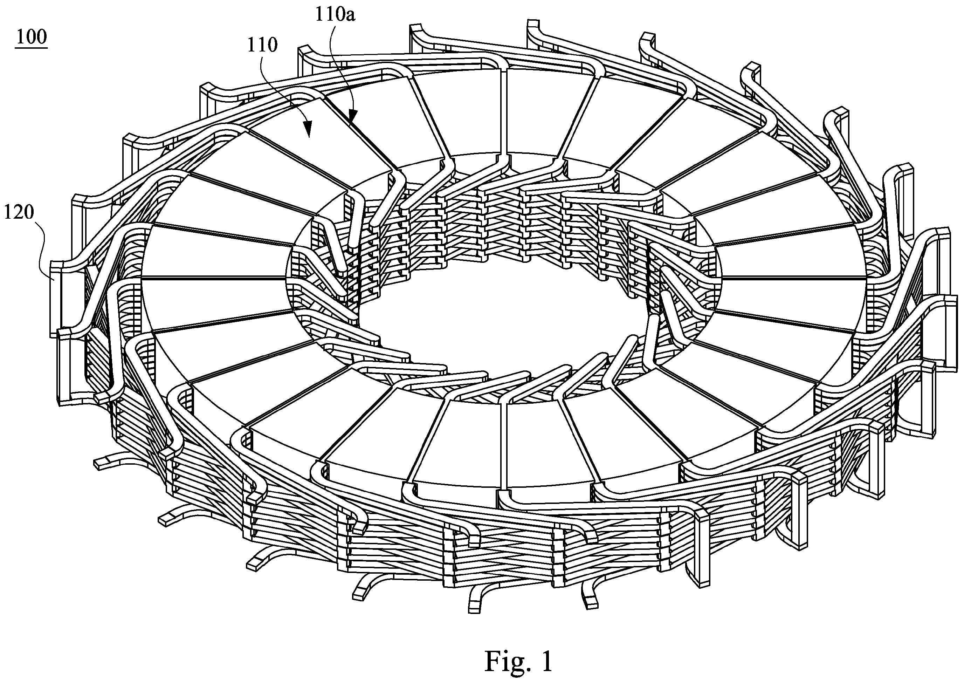

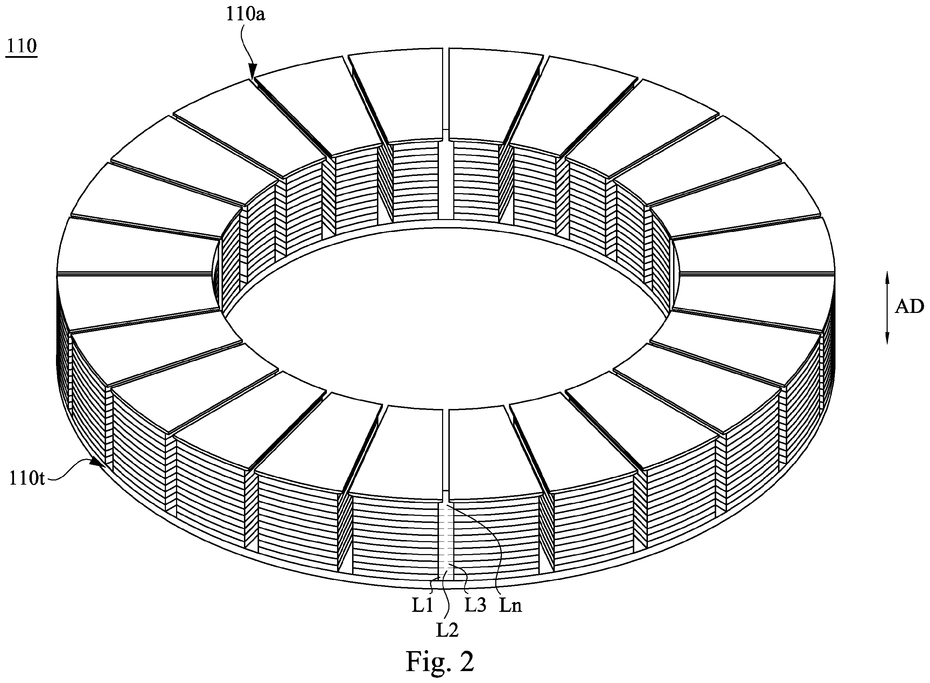

Reference is made to Figs. 1 and 2, a stator structure 100 of an axial flux motor includes a soft magnetic material body 110 and a plurality of conductors 120. The soft magnetic material body 110 has a plurality of magnetic poles and a plurality of slots 110a. In some embodiments of the present disclosure, the soft magnetic material body 110 includes 24 slots 110a for a plurality of conductors 120 to pass through in a distributed winding manner to form a plurality of windings. Taking a three-phase axial flux motor as an example, 24 slots 110a are divided by 3 (phases) to form 8 magnetic poles. In other words, a section including three slots forms a magnetic pole. In some embodiments of the present disclosure, the soft magnetic material body 110 is composed of a plurality of silicon steel sheets 110t stacked in an axial direction AD or in a radial direction. In some embodiments of the present disclosure, the soft magnetic material body 110 is composed of soft magnetic composite (SMC). In some embodiments of the present disclosure, each slot 110a includes a plurality of level-positions (L1, L2, L3~Ln) arranged in the axial direction AD, and a single conductor only occupies a single level-position while being routed through the slot.

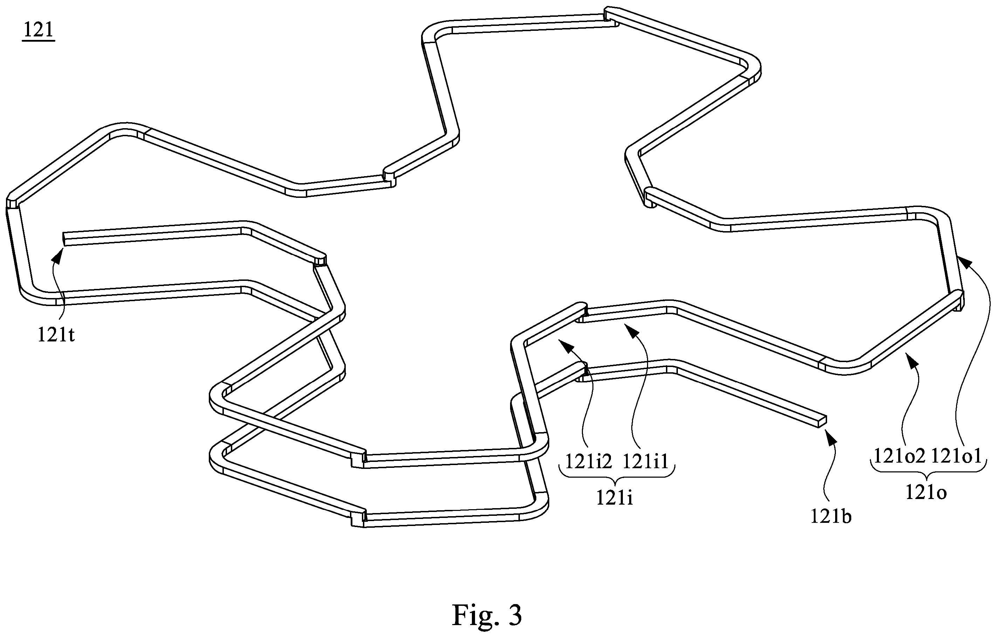

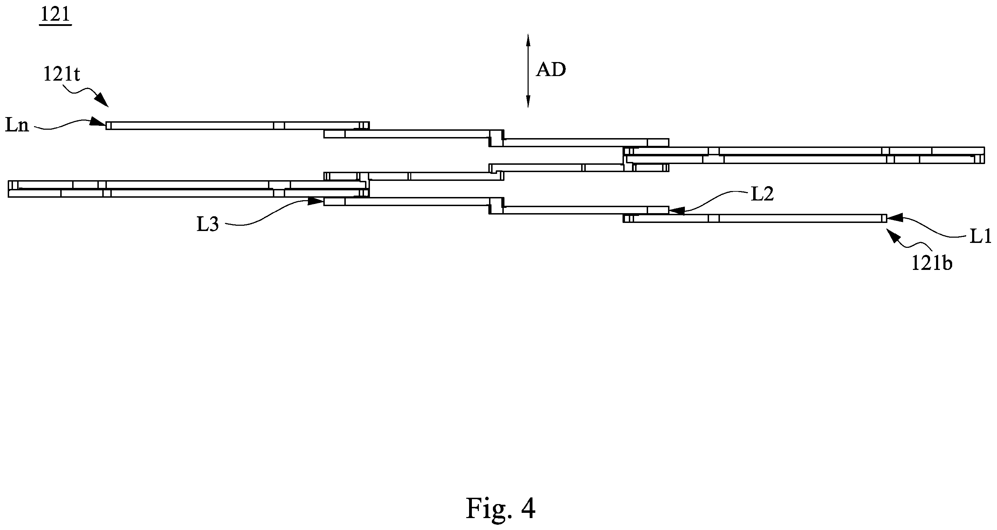

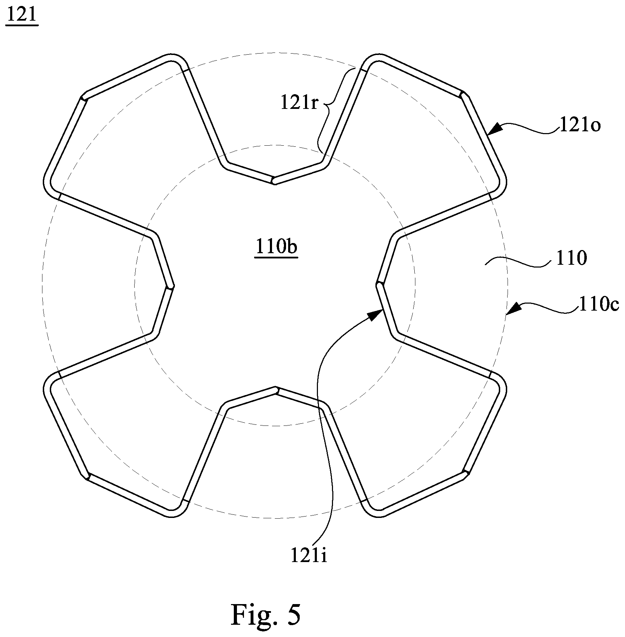

Reference is made to Figs. 3, 4 and 5, a conductor 121 is configured to pass through the slot 110a of the soft magnetic material body 110 to form a winding. In some embodiments of the present disclosure, the conductor 121 includes a plurality of inner diameter protrusions 121i, a plurality of receiving portions 121r, and a plurality of outer diameter protrusion 121o. Each receiving portion 121r is located in a corresponding slot of the soft magnetic material body 110 and connected between the corresponding inner diameter protrusion 121i and the outer diameter protrusion 121o. The soft magnetic material body 110 is generally a hollow columnar structure. The inner diameter protrusions 121i are located in an internal space 110b of the soft magnetic material body 110, and the outer diameter protrusions 121o are exposed outside an outer sidewall 110c of the soft magnetic material body 110 (referring to Fig. 5), the internal space 110b is located between the soft magnetic material body 110 and an axis, i.e., the soft magnetic material body 110 surrounds the axis to form the internal space 110b. In some embodiments of the present disclosure, each conductor 121 includes a plurality of inner diameter protrusions 121i located in the internal space 110b surrounding the axis of the soft magnetic material body 110 (refer to Fig. 5), and each inner diameter protrusion 121i has two halves (121i1, 121i2) at a level-position difference in the axial direction AD (refer to Fig. 3, the half 121i2 is one level-position higher than the half 121i1). That is, two halves (121i1, 121i2) of each inner diameter protrusion 121i are at two positions that are aligned with two immediately-adjacent level-positions in the axial direction AD respectively. In some embodiments of the present disclosure, each conductor 121 includes a plurality of outer diameter protrusions 121o exposed outside the outer sidewall 110c of the soft magnetic material body 110 (refer to Fig. 5), and each outer diameter protrusion 121o has two halves (121o1, 121o2) located at a level-position difference in the axial direction AD (refer to Fig. 3, the half 121o2 is one level-position higher than the half 121o1). That is, two halves 121o1, 121o2 of each outer diameter protrusion 121o are at two positions that are aligned with two immediately-adjacent level-positions in the axial direction AD respectively. In some embodiments of the present disclosure, after each conductor 121 passes through one of the lowest level-positions among the level-positions (refer to Fig. 4, e.g., the bottom end 121b is located at the level-position L1), each conductor 121 is routed from one magnetic pole position to another magnetic pole position, climbing to the higher level-positions (such as L2), until climbing through one of the highest level-positions among the level-positions (refer to Fig. 4, i.e., the top end 121t is located at level-position Ln). In some embodiments of the present disclosure, each conductor 121 is formed by bending a continuous linear conductor. In other embodiments of the present disclosure, each conductor 121 includes a plurality of assembled or welded linear conductors.

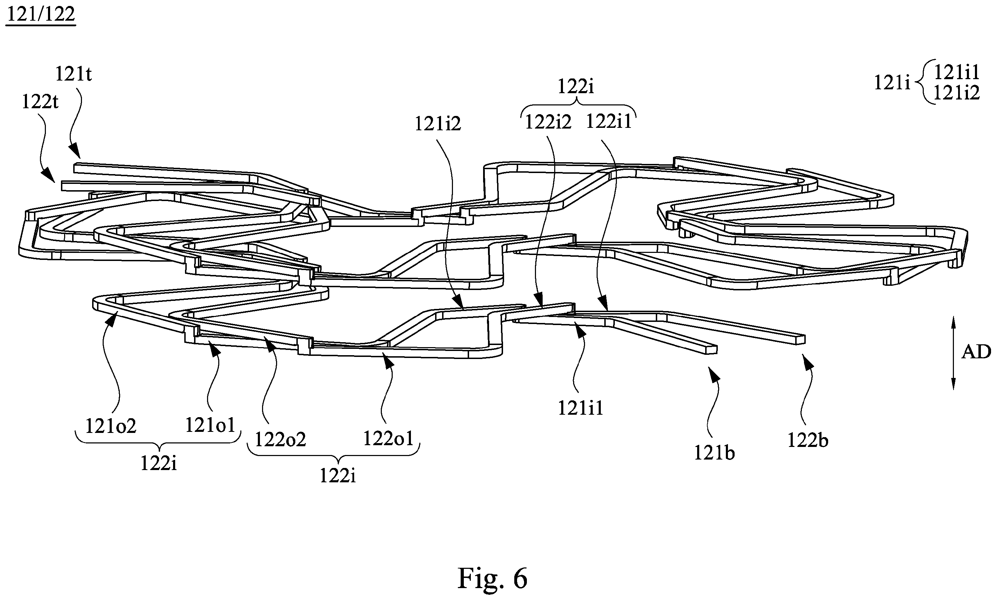

Reference is made to Fig. 6, and this figure shows the two conductors (121/122) in Fig. 1 passing through the adjacent slots of the soft magnetic material body 110. In order to clearly show the positional relationship of the two conductors (121, 122), the soft magnetic material body 110 is not shown. After the two conductors (121, 122) go through one of the lowest level-positions of the slots (i.e., the bottom ends 121b and 122b are at the lowest level-position), they climb up to the higher level-positions among the level-positions each time they are routed to the next magnetic pole position until climbing passes through one of the highest level-positions among the level-positions (i.e., the top end 121t and 122t are at the highest level-position). In some embodiments of the invention, each inner diameter protrusion 122i of the conductor 122 is at least partially located above the corresponding inner diameter protrusion 121i of the conductor 121 in the axial direction AD (e.g., the half 122i2 of the conductor 122 is located above the half 122i1 of the conductor 121). In some embodiments of the present disclosure, each outer diameter protrusion 122o of the conductor 122 is at least partially located above the corresponding outer diameter protrusion 121o of the conductor 121 in the axial direction AD (e.g., the half 122o2 of the conductor 122 is located between the conductor 121 Above half 122o1). In some embodiments of the invention, the half 122i2 of each inner diameter protrusion 122i of the conductor 122 is located above the half 121i1 of the immediately-adjacent inner diameter protrusion 121i of the conductor 121 in the axial direction AD. In some embodiments of the invention, the half 122o2 of each outer diameter protrusion 122o of the conductor 122 is above the half 121o1 of the immediately adjacent outer diameter protrusion 121o of the conductor 121 in the axial direction AD. In some embodiments of the present disclosure. When the two conductors (121, 122) are wound around the soft magnetic material body 110, all the portions of the conductors (121, 122) protruding from all the slots of the soft magnetic material body 110 have their relative positions remain unchanged in the axial direction AD during the entire winding process. That is, the relative positions of the upper and lower level-positions for all inner diameter protrusions and outer diameter protrusions of the conductors (121, 122) remain their positions relation unchanged. For example, the relative positions of the outer diameter protrusions of the two conductors remain unchanged, and/or the relative positions of the inner diameter protrusions of the two conductors remain unchanged. In some embodiments of the present disclosure, the two conductors (121, 122) are arranged in a spiral or star-shaped arrangement while being wound around the soft magnetic material body 110 to further avoid interlacing of upper and lower conductors.

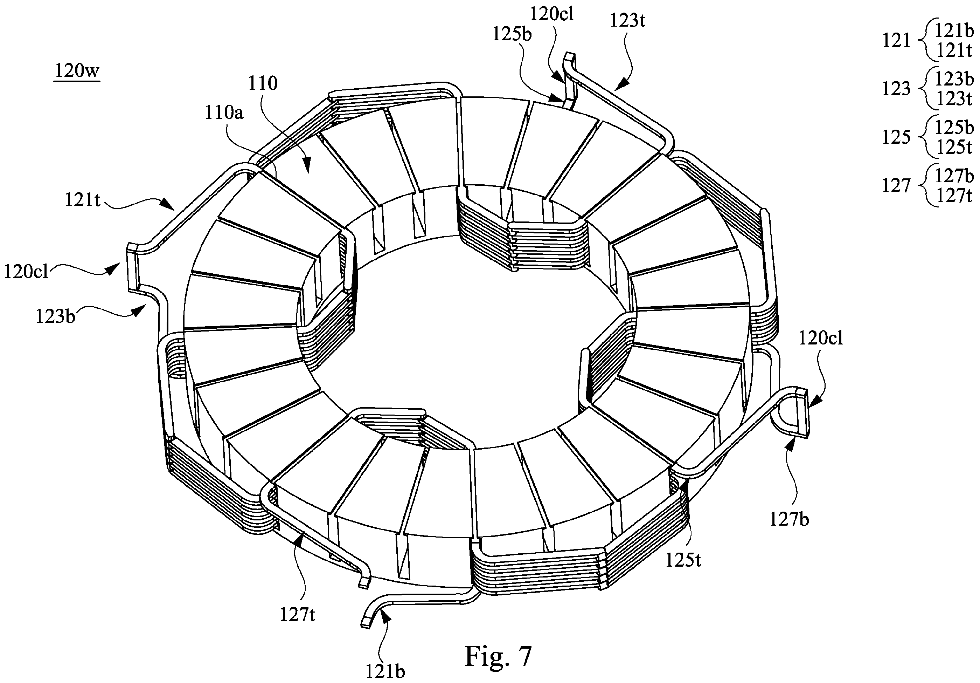

Reference is made to Fig. 7, and the winding 120w includes multiple conductors (121, 123, 125, 127) connected with one another. After the bottom end 121b of the conductor 121 is routed through one of the lowest level-positions (e.g., L1) in the corresponding slot, it climbs to a higher level-position in the slot each time when it crosses to be wound on the next magnetic pole position, until the top end 121t of the conductor 121 climbs through one of the highest level-positions in the slots. Similarly, after the bottom end 123b of the conductor 123 is routed through one of the lowest level-positions (e.g., L1) in the corresponding slot, it climbs to a higher level-position in the slot every time when it crosses to be wound on the next magnetic pole position, until the top end 123t of the conductor 123 climbs through one of the highest level-positions in the slots. The two conductors (121, 123) are connected in series with a connecting section 120cl. Then, after the bottom end 125b of the conductor 125 crosses one of the lowest level-positions (e.g., L1) in the corresponding slot, it climbs to a higher level-position in the slot each time when it crosses to be wound on the next magnetic pole position, until the top end 125t of the conductor 125 climbs through one of the highest level-positions in the slots. The two conductors (123, 125) are connected in series with a connecting section 120cl. After the bottom end 127b of the conductor 127 is routed through one of the lowest level-positions (e.g., L1) in the corresponding slot, it climbs to a higher level-position in the slot each time when it crosses to be wound on the next magnetic pole position, until the top end 127t of the conductor 127 climbs through one of the highest level-positions in the slot. The two conductors (125, 127) are connected in series with a connecting section 120cl. Multiple conductors (121, 123, 125, 127) are connected in series through the connecting section 120cl to form a winding 120w. Taking a three-phase axial flux motor as an example, the other two-phase windings (i.e., the U-phase and V-phase windings) are also formed in a similar manner and occupy the remaining slots 110a of the soft magnetic material body 110, which will not be described again.

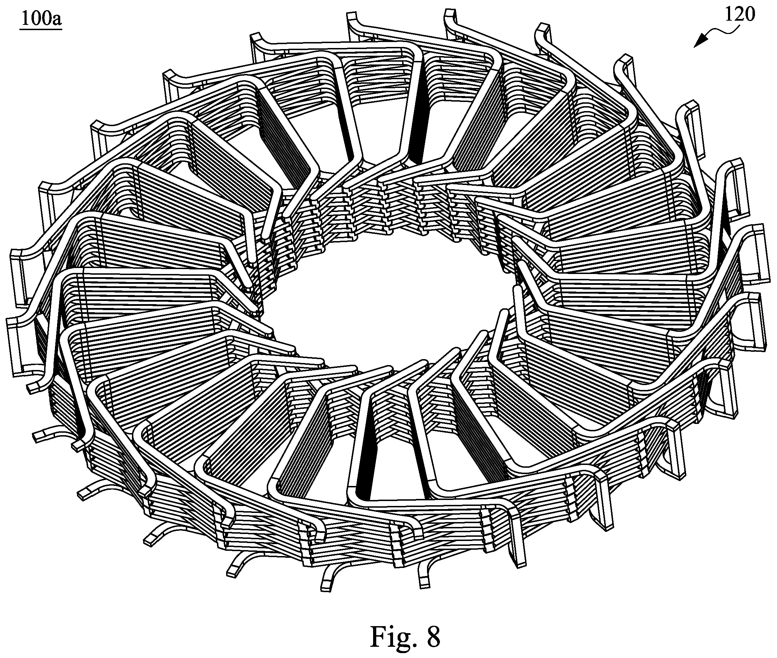

Reference is made to Fig. 8, and this figure shows a coreless stator structure 100a of an axial flux motor with a plurality of conductors 120, and the coreless stator structure 100a is not equipped with a soft magnetic material body, e.g., the soft magnetic material body 110 in Figs. 1 and 2, to achieve a simple and neat structure. Without the soft magnetic material body, the coreless stator structure 100a still has a plurality of magnetic poles equipped with a plurality of magnetic pole positions and level-positions, and the conductors 120 has similar features as the conductors (121, 122, 123, 125, 127) illustrated in Figs. 3, 4, 5, 6, 7. Each conductor 120 climbs to a higher level-position while being routed from a magnetic pole to a next magnetic pole after passing through one of the lowest level-positions until climbing to the highest level-positions. The portions of the conductors have relative positions remain unchanged in an axial direction.

In sum, the stator structure of the axial flux motor disclosed herein has its conductor formed into a climbing structure arranged in a spiral or star-shaped arrangement in the circumferential direction. Each time when each conductor is routed from one magnetic pole position to the next magnetic pole position, the conductor protruding from the slot climbs to a higher level-position, and continue to climb toward the highest level-position until reaching the highest level-position in the slot. This conductor structure allows the relative positions of the upper and lower conductors to remain positions relation unchanged while winding different strands of conductors, thereby avoiding up and down staggering. This structure allows each conductor to be assembled into a complete winding in a simple manner after being formed or bent, and deals with various deficiencies in conventional solutions. After each conductor climbs to the highest level-position of the slot, the conductors are connected in series to the next conductor through the connecting section, and the same structure continues to climb from the lowest level-position to the highest level-position.

## Claims

1. A stator structure (100,100a) of an axial flux motor comprising:
a plurality of magnetic poles having a plurality of magnetic pole positions;
a plurality of level-positions (L1-Ln); and
a plurality of conductors (120, 121, 123, 125, 127) routed from one magnetic pole position to another magnetic pole position of the magnetic pole positions and wound through the level-positions (L1-Ln) respectively,
wherein each conductor (120, 121, 123, 125, 127) climbs to a higher level-position while being routed from a magnetic pole to a next magnetic pole of the magnetic poles after passing through one of the lowest level-position (L1) of the level-positions (L1-Ln) until climbing to the highest level-position (Ln) of the level-positions (L1-Ln),
wherein the conductors (120, 121, 123, 125, 127) comprise a first conductor (121) and a second conductor (122), and all portions of the first conductor (121) and the second conductor (122) have relative positions remain unchanged in an axial direction (AD).

2. The stator structure (100,100a) of claim 1, wherein each conductor includes a plurality of inner diameter protrusions (121i,122i) located in an internal space (110b) surrounding an axis of the stator structure (100,100a), and two halves (121i1,121i2,122i1,122i2) of each inner diameter protrusion (121i,122i) are at two positions that are aligned with two immediately-adjacent level-positions (L1-Ln) in the axial direction (AD) respectively.

3. The stator structure (100,100a) of claim 1, wherein each conductor includes a plurality of outer diameter protrusions (121o,122o) exposed outside the stator structure (100,100a), and two halves (121o1,121o2,122o1,122o2) of each outer diameter protrusion (121o,122o) are at two positions that are aligned with two immediately-adjacent level-positions (L1-Ln) in the axial direction (AD) respectively.

4. The stator structure (100,100a) of claim 1, wherein each conductor includes a plurality of inner diameter protrusions (121i,122i) located in an internal space (110b) surrounding an axis of the stator structure (100,100a), and a half (122i2) of each inner diameter protrusion (121i,122i) of the second conductor (122) is located above an immediately-adjacent half (121i1) of a corresponding inner diameter protrusion (121i,122i) of the first conductor (121) in the axial direction (AD).

5. The stator structure (100,100a) of claim 1, wherein each conductor includes a plurality of outer diameter protrusions (121o,122o) exposed outside the stator structure (100,100a), and a half (122o2) of each outer diameter protrusion (121o,122o) of the second conductor (122) is located above an immediately-adjacent half (121o1) of a corresponding outer diameter protrusion (121o,122o) of the first conductor (121) in the axial direction (AD).

6. The stator structure (100,100a) of claim 1, wherein each conductor includes a plurality of inner diameter protrusions (121i,122i) located in an internal space (110b) surrounding an axis of the stator structure (100,100a), and each inner diameter protrusion (121i,122i) of the second conductor (122) is at least partially located above a corresponding inner diameter protrusion (121i,122i) of the first conductor (121) in the axial direction (AD).

7. The stator structure (100,100a) of claim 1, wherein each conductor includes a plurality of outer diameter protrusions (121o,122o) exposed outside the stator structure (100,100a), and each outer diameter protrusion (121o,122o) of the second conductor (122) is at least partially located above a corresponding outer diameter protrusion (121o,122o) of the first conductor (121) in the axial direction (AD).

8. The stator structure (100,100a) of claim 1, wherein each conductor is formed by bending a continuous conductor, or includes a plurality of assembled or welded conductors (121, 123, 125, 127).

9. The stator structure (100,100a) of claim 1, wherein each conductor is wound around the stator in a spiral or star-shaped arrangement.

10. The stator structure (100) of claim 1, further comprising a soft magnetic material body (110) having the plurality of magnetic poles and a plurality of slots (110a), wherein each slot (110a) including the level-positions (L1-Ln) arranged in the axial direction (AD).

11. The stator structure (100) of claim 10, wherein each conductor (121) includes a plurality of inner diameter protrusions (121i), a plurality of receiving portions (121r) and a plurality of outer diameter protrusions (121o), the receiving portions (121r) are disposed in the slots (110a), the inner diameter protrusions (121i,) are disposed in an internal space (110b) surrounding an axis of the stator structure (100), and the outer diameter protrusions (121o, 122o) are exposed outside the stator structure (100).

12. The stator structure (100) of claim 10, wherein the conductors (121, 123, 125, 127) are inserted in the slots (110a) and partially protruded from the soft magnetic material body (110) toward both an internal space (110b) surrounding an axis and an outer sidewall (110c) of the soft magnetic material body (110).

13. The stator structure (100) of claim 12, wherein each conductor includes a plurality of inner diameter protrusions (121i,122i) located in the internal space (110b) surrounding the axis of the soft magnetic material body (110), and two halves (121i1,121i2,122i1,122i2) of each inner diameter protrusion (121i,122i) are at two positions that are aligned with two immediately-adjacent level-positions (L1-Ln) in the axial direction (AD) respectively.

14. The stator structure (100) of claim 12, wherein each conductor includes a plurality of outer diameter protrusions (121o,122o) exposed outside the outer sidewall (110c) of the soft magnetic material body (110), and two halves (121o1,121o2,122o1,122o2) of each outer diameter protrusion (121o,122o) are at two positions that are aligned with two immediately-adjacent level-positions (L1-Ln) in the axial direction (AD) respectively.

15. The stator structure (100) of claim 12, wherein each conductor (121) includes a plurality of inner diameter protrusions (121i), a plurality of receiving portions (121r) and a plurality of outer diameter protrusions (121o), the receiving portions (121r) are disposed in the slots (110a), the inner diameter protrusions (121i) are disposed in the internal space (110b) surrounding an axis of the soft magnetic material body (110), and the outer diameter protrusions (121o) are exposed outside the outer sidewall (110c) of the soft magnetic material body (110).
